(19) Europäisches Patentamt
European Patent Office
Office européen des brevets

(11) Publication number: **0 021 637**
**A1**

# (12) EUROPEAN PATENT APPLICATION

(21) Application number: 80301840.7

(22) Date of filing: 03.06.80

(51) Int. Cl.[3]: C 07 C 149/24
C 07 C 149/26, C 07 C 149/42
//C07C148/00, A01N33/04

(30) Priority: 13.06.79 GB 7920649

(43) Date of publication of application:
07.01.81 Bulletin 81/1

(84) Designated Contracting States:
BE CH DE FR IT LI NL

(71) Applicant: NATIONAL RESEARCH DEVELOPMENT CORPORATION
P.O. Box 236 Kingsgate House 66-74 Victoria Street
London SW1E 6SL(GB)

(72) Inventor: Bewick, Alan
The Keeper's Cottage Manor Road Chilworth
Southampton(GB)

(72) Inventor: Coe, David Edward
2 Harborough Road
Southampton(GB)

(72) Inventor: Mellor, John Macrae
"Oakes" West End Road
Southampton(GB)

(72) Inventor: Walton, David John
Highfield Hall Ondurman Road
Southampton(GB)

(74) Representative: Burford, Anthony Frederick et al,
W.H. Beck, Greener & Co. 7 Stone Buildings Lincoln's Inn
London WC2A 3SZ(GB)

(54) **Amidothiol derivatives.**

(57) Amidothiol derivatives have the formula

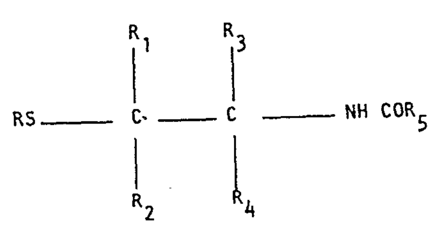

wherein:
R represents an alkyl, alk-2 to 6 - enyl, phenylalkyl, phenyl or heterocyclic group optionally substituted by one or more functional groups inert to electrochemical oxidation:
$R_1$, $R_2$, $R_3$ and $R_4$ independently represent hydrogen or substituent groups, and $r_5$ represents alkyl, phenylalkyl or phenyl. The derivatives are useful in the preparation of pharmaceutically active compounds and dyestuffs and have herbicidal and/or antibacterial activity. The compounds can be prepared by electrochemical oxidation of a corresponding organic disulphide in the presence of the corresponding alkene and the corresponding organic nitrile, and treatment of the reaction product with water.

EP 0 021 637 A1

AMIDOTHIOL DERIVATIVES

The present invention relates to novel amidothiol derivatives which are useful intermediates in the preparation of pharmaceutically active compounds, for example antibiotics, and have herbicidal and/or anti-bacterial activity. The invention also relates to a novel process for the production of amidothiol derivatives by an electrochemical reaction of a disulphide and nitrile with an alkene.

A number of known pharmaceutical active compounds, for example penicillin (ie benzylpenicillin sodium) and related antibiotics, contain a 1,3 thiazolidine ring or otherwise have nitrogen and sulphur in a vicinal relationship. The production or synthesis of such compounds would be facilitated by the ready availability of vicinal aminothiols. Moreover, the availability of such aminothiols would facilitate the production of new compounds having vicinal nitrogen and sulphur which would be expected to be pharmaceutically useful.

It is therefore an object of the present invention to provide a method of preparing aminothiols in a commercially viable manner.

It is also an object of the invention to provide compounds having herbicidal and/or anti-bacterial activity.

BAD ORIGINAL

According to a first aspect of the present invention, there are provided novel amidothiol derivatives of the following general Formula I

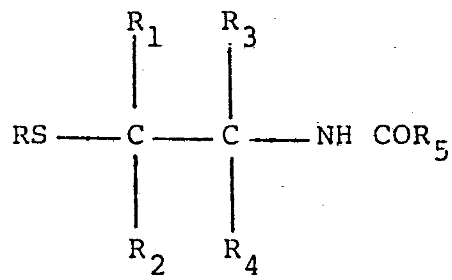

Formula I

wherein:-

R represents an alkyl, alk-2 to 6 - enyl, phenylalkyl, phenyl or heterocyclic group optionally substituted by one or more functional groups inert to electrochemical oxidation;

$R_1$, $R_2$, $R_3$ and $R_4$ independently represent hydrogen or substituent groups of an alkene of the following general Formula II

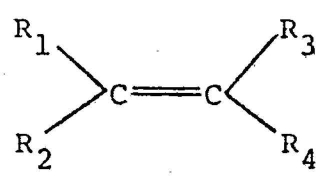

Formula II

and

$R_5$ represents alkyl, phenylalkyl or phenyl.

The alkene of Formula II from which the hydrogen or substituent groups $R_1$, $R_2$, $R_3$ and $R_4$ are derived can contain more than one double bond and in particular can be a diene or terpene. Further the alkene can contain

one or more functional groups. However, there is an overall requirement that the alkene should be capable of reaction with the corresponding disulphide and nitrile to provide the amidothiol derivative of Formula I.

Usually, but not necessarily, $R_1$, $R_2$, $R_3$ and $R_4$ will independently represent hydrogen, alkyl, phenylalkyl, phenyl, carboxy, alkoxycarbonyl, phenylalkoxycarbonyl or phenoxycarbonyl or $R_1$ and $R_3$ together represent alkylene optionally substituted in the hydrocarbon chain by alkylimino, phenylalkylimino, phenylimino, oxygen or sulphur.

The hydrocarbon groups or moieties in the compounds of Formula I can be substituted by functional groups provided that those groups are inert during the electrochemical preparation of the relevant compound of Formula I in the sense that the addition of sulphur and nitrogen to the required double bond of the alkene staring material is not prevented. Examples of suitable functional groups are alkoxy, phenoxy, alkanoyloxy benzoyloxy, alkanoylamino, benzamido, bromine, chlorine and fluorine.

References in this specification to an alkyl group or moiety mean a straight or branched chain or cyclic alkyl group or moiety unless some limitation is stated or clearly implied by the context. Further,

BAD ORIGINAL

reference to a specific alkyl group or moiety having structural isomers includes all of those isomers and mixtures thereof unless a particular isomer is specified or clearly implied. Usually, but not necessarily, the alkyl group or moiety will have 1 to 12 (inclusive) carbon atoms. Except for any alkyl or phenylalkyl group represented by $R_1$, it is preferred that the alkyl group or moiety has 1 to 6 (inclusive) carbon atoms and especially 1 to 4 (inclusive) carbon atoms. In the case of an alkyl or phenylalkyl group represented by $R_1$, it is preferred that the alkyl group or moiety has 1 to 8 (inclusive) especially 1 to 6 (inclusive), carbon atoms.

Examples of preferred alkyl groups are methyl, ethyl, iso-propyl, n-propyl, n-butyl, tert-butyl, n-pentyl, n-hexyl, cyclohexyl and, in the case of $R_1$, n octyl.

Examples of preferred phenylalkyl groups are benzyl, phenethyl, 1-phenylethyl, 3-phenylpropyl and 4-phenylbutyl.

Examples of preferred alkoxy groups are methoxy, ethoxy, n-propoxy, n-butoxy, iso-propoxy and tert - butoxy.

Examples of preferred alkanoyloxy groups are acetoxy, propionyloxy, butyryloxy and tert-butanoyloxy.

Examples of preferred alkanoylamino groups are acetamido, propionamido, butrylamino and tert-butanoylamino.

Examples of heterocyclic groups are imidazolyl, pyridyl, pyrrolidinyl, pyrrolinyl, thiazolidine, thiaazobicycloheptyl.

The alkenyl groups represented by R can be straight or branched chain or cyclic alkenyl but must have the double bond in the 2 to 6 (inclusive) position relative to the free valency of the group. Usually, but not necessarily, the alkenyl group will have 3 to 12 (inclusive) carbon atoms, preferably 3 to 6 (inclusive) carbon atoms and especially 3 or 4 carbon atoms. Examples of preferred alkenyl groups are allyl, but-2-enyl,but-3-enyl and pent-3-enyl.

The alkylene groups represented by $R_1$ and $R_3$ together can be straight or branched chain and can be substituted in the hydrocarbon chain by alkylimino, phenylalkylimino, phenylimino, oxygen or sulphur. Usually, but not necessarily, the alkylene group will have 2 to 12 (inclusive) carbon atoms, preferably 3 to 8 (inclusive) carbon atoms and especially 3 or 4 carbon atoms. It is also preferred that the alkylene group has 2 to 6 (inclusive) ring atoms and especially 3 or 4 ring atoms. Examples of preferred alkylene groups are ethylene, trimethylene, tetramethylene, ethyleneoxy,

ethylenethio, and N-methyl-trimethyleneimino.

One preferred genus of the amidothiol derivatives of Formula I are those compound wherein:-

R represents alkyl having 1 to 4 carbon atoms, phenylalkyl in which the alkyl moiety has 1 to 4 carbon atoms or phenyl.

$R_2$, $R_3$ and $R_4$ independently represent hydrogen or alkyl having 1 to 6 carbon atoms or $R_1$ and $R_3$ together represent alkylene having 2 to 6 carbon atoms, and $R_5$ represents alkyl having 1 to 4 carbon atoms.

Examples of compounds of Formula I are the following:-

2 - acetamido - 1-phenylthio-ethane
2 - acetamido - 1-methylthio-propane
2 - acetamido - 1-phenylthio-hexane
2 - acetamido - 1-phenylthio-octane
3 - acetamido - 2-phenylthio-hexane
2 - acetamido - 3-phenylthio-octane
3 - acetamido - 2-phenylthio-octane
2 - propionamido - 1-methylthio-hexane
2 - butyrylamido - 1-methylthio-hexane
2 - tert-butanamido - 1-methylthio-hexane
2 - acetamido - 1-methylthio-hexane
2 - acetamido - 1 -ethylthio-hexane
2 - acetamido - 3-methylthio-octane
3 - acetamido -2-methylthio-octane

2 - acetamido - 1 -n-propylthio-hexane

2 - acetamido - 1 -n-butylthio-hexane

2 - acetamido - 1 - tert-butylthio-hexane

2 - acetamido - 1 -benzylthio-hexane

2 - acetamido - 1 -allylthio-hexane

2 - benzamido - 1 -phenylthio-hexane

2 - benzamido - 1 -benzylthio-hexane

2 - acetamido - 1-benzylthio-cyclohexane

2 - acetamido - 1-phenylthio-cyclopentane

2 - acetamido-1-phenylthio-cyclohexane

2 - acetamido-1-methylthio-cyclohexane

2 - acetamido - 1-phenylthio-1-phenyl-ethane

2 - acetamido - 3-phenylthio-N-methyl-piperidine

methyl 2-acetamido - 3-phenylthio-butyrate

ethyl 2-acetamido - 3-tert-butylthio-butyrate

The amidothiol derivatives of Formula I are useful as intermediates in the preparation of pharmaceutically active compounds, for example antibiotics, the preparation of herbicidal and antibacterial agents and the preparation of dyestuffs. In particular, the amidothiol derivatives of Formula I can be reduced or hydrolysed to the corresponding aminothiols of the following general Formula III

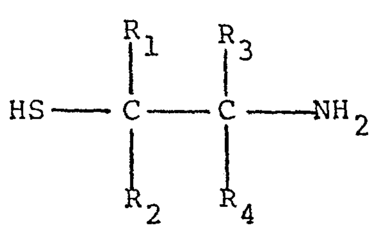

Formula III

BAD ORIGINAL

wherein $R_1$, $R_2$, $R_3$ and $R_4$ are as defined in connection with Formula I. The reduction or hydrolysis will be carried out in manner known per se for the reduction or hydrolysis of thioethers to mercaptans and of alkanoylamines to amines.

The aminothiols of Formula III have herbicidal and/or antibacterial activity.

The compounds of Formula I can be prepared by a novel electrochemical process involving the oxidation of a corresponding organic disulphide in the presence of the corresponding alkene and the corresponding organic nitrile to provide a reaction product, believed to be a nitrilium compound, which is treated with water to yield the desired amidothiol derivative.

The organic disulphide has the Formula RSSR in which R is as defined in connection with Formula I. The reaction proceeds more effectively with primary groups than with secondary groups and more effectively with secondary groups than with tertiary groups. Further in the case where R represents alkenyl, the reactivity of the disulphide decreases with the distance of the double bond from the free valency of the group. However, the reaction does not proceed with disulphides in which the double bond in in the 1-position.

The disulphide should be electrochemically oxidised in preference to the alkene. However, the

reaction could proceed with a substantial excess of disulphide in the event that the alkene is capable of oxidation under the reaction conditions employed.

It is believed that the disulphide is electrochemically oxidized to form the cation $RS^+$ which subsequently attacks the double bond of the alkene to form a carbonium ion.

The alkene has the Formula II previously referred to. It will be apparent that the alkene should not have any alternative site which would preferentially react with the disulphide or the nitrile but can contain more than one double bond and in particular can be a diene or a terpene.

The nitrile has the formula $R_5CN$ and is believed to react with the carbonium ion of the following general Formula lV resultant from the attack of the cation $RS^+$ on the alkene to form a nitrilium compound of the following general Formula V.

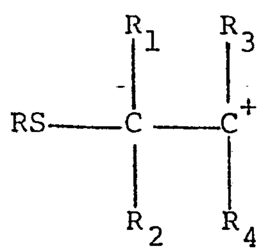

Formula lV

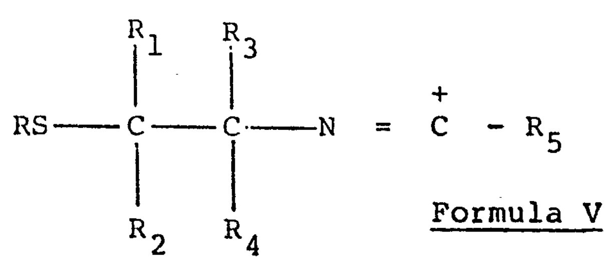

Formula V

Conveniently the nitrile is present in the reaction as a solvent or co-solvent.

The electrochemical reaction is carried out using suitable electrodes and an electrolyte. Preferably, platinium electrodes are used although other electrodes such as carbon electrodes can be used. The electrolyte will be one which is soluble in organic solvents and relatively highly ionised but must not discharge at the electrode. Suitable electrolytes include lithium perchlorate and tert-n-butyl ammonium fluoroborate. If the alkene is a gas, the reaction can be carried out in a closed vessel with the gas being circulated through the reaction mixture. In general terms conventional electrolysis techniques are employed.

Vicinal amidothioethers are obtained from the addition products of the electrochemical reaction by the addition of water. Usually, water is added to the anolyte immediately after termination of the electrolysis. The amidothioether can then be separated from the aqueous phase by extraction with a suitable organic solvent such as diethyl ether. The product can be further purified by distillation, recrystallisation or chromatography.

The invention is illustrated by the following non-limiting Examples.

EXAMPLE 1

2-Acetamido-1-methylthio-cyclohexane

A mixture of dimethyldisulphide (96 mg) in acetonitrile containing cyclohexene (405mg) was placed in a conventional H-type electrolytic cell. The cell was provided with a number 4 sintered glass frit as divider and with 1 sq.cm. platinum mesh cathode and anode. The potential measurement was made with respect to a $Ag/Ag^+$ (0.01M) reference electrode. Tetra-n-butyl ammonium fluoroborate (0.1M) was added as electrolyte. A constant potential of 1.20 volts was maintained at the anode with a potentiostat until 2 coulomb equivalents of charge per mole of disulphide had been passed. Water was then added to the anolyte and the aqueous phase extracted with diethyl ether to yield 116mg of 2-acetamido 1-methylthio cyclohexane. Mass Spec. $^m/_e$ 187 (parent ion). I.R. 3290 & 1650 $cm^{-1}$.

EXAMPLE 2

2 Acetamido 1-phenylthio-cyclohexane

The procedure of Example 1 was repeated using diphenyldisulphide (200 mg) in acetonitrile containing cyclohexene (405mg) at 1.40 volts until the passage of 2 coulomb equivalents of charge. After the addition of water and extraction with diethyl ether, there was

obtained 115mg of 2-acetamido-1-phenylthio-cyclohexane (melting point 132-133°C). Mass Spec. $^m/_e$ 249 (parent ion). I.R. 3320 & 1648 $cm^{-1}$.

EXAMPLE 3

2-Acetamido-1-phenylthio-cyclopentane

The procedure of Example 1 was repeated using diphenyl-disulphide (300 mg) in acetonitrile containing cyclopentene (1.62mg) at 1.40 volts for the passage of 3 coulomb equivalents of charge. After addition of water and extraction with diethyl ether, there was obtained 178 mg of 2-acetamido-1-phenylthio-cyclopentane. Mass Spec. $^m/_e$ 235 (parent ion). I.R. 3290 & 1646 $cm^{-1}$.

EXAMPLE 4

2-Acetamido-1-phenylthio-octane

The procedure of Example 1 was repeated using diphenyl-disulphide (250mg) in acetonitrile containing 1-octene (430mg) at 1.40 volts until the passage of 1.94 coulomb equivalents of charge. After the addition of water and extraction with diethyl ether, there was obtained 230mg of 2-acetamido-1-phenylthio-octane. Mass Spec. $^m/_e$ 279 (parent ion). I.R. 3290 & 1650 $cm^{-1}$.

EXAMPLE 5

2-Acetamido-1-phenylthio-hexane

The procedure of Example 1 was repeated using diphenyl-disulphide (258mg) in acetonitrile containing 1-hexene

(336mg) at 1.40 volts until the passage of 2 coulomb equivalents of charge. After the addition of water and extraction with diethyl ether, there was obtained 46 mg of 2-acetamido-1-phenylthio-hexane. Mass Spec. $^{m}/_{e}$ 251 (parent ion). I.R. 1650 $cm^{-1}$.

EXAMPLE 6

2-Acetamido-3-methylthio-octane and
3-Acetamido-2-methylthio-octane

The procedure of Example 1 was repeated using dimethyldisulphide (96 mg; 1.02 mmol) and 2-octene (359 mg; 3.2 mmol) in acetonitrile (15 ml) at +1.20V until 1.5 coulomb equivalents of charge has been passed. After the addition of water and extraction with diethyl ether, there was obtained 186 mg of a 55:45 mixture of 2-acetamido-3-methylthio-octane and 3-acetamido-2-methylthio-octane which are separated by gas-liquid chromatography.

2-Acetamido-3-methylthio-octane., Mass Spec. $^{m}/_{e}$ 217 ($M^+$ 1%), 158 (82%), 131 (22%), 102 (42%), 86 (88%) and 44 (100%).

3-Acetamido-2-methylthio-octane, Mass Spec. $^{m}/_{e}$ 217 ($M^+$ 61%), 158 (32%), 142 (23%), 101 (13%) and 100 (100%).

EXAMPLE 7

2-Acetamido-1-methylthio-hexane

The procedure of Example 1 was repeated using

dimethyldisulphide (96 mg; 1.02 mmol) and 1-hexene (670 mg: 8 mmol) in acetonitrile (15 ml) at +1.20 V until 1.3 coulomb equivalents of charge had been passed. After the addition of water and extraction with diethyl ether there was obtained 36 mg of 2-acetamido-1-methylthio-hexane. Mass Spec. $^m/e$ 189 ($M^+$), 130 (57%) and 86 (100%). I.R. 3290 & 1645 $cm^{-1}$.

EXAMPLE 8

2-Acetamido-3-phenylthio-octane and 3-Acetamido-2-phenylthio-octane

The procedure of Example 1 was repeated using diphenyl-disulphide (300 mg; 1.38 mmol) and 2-octene (1.44 g; 12.8 mmol) in acetonitrile (15 ml) at +1.40V until 2 coulomb equivalents of charge had been passed. After the addition of water and extraction with diethyl ether there was obtained 321 mg of a mixture of 40% 2-acetamido-3-phenylthio-octane and 60% 3-acetamido-2-phenylthio-octane which are separated by gas-liquid chromatography.

2-Acetamido-3-phenylthio-octane, Mass Spec. $^m/e$ 279 ($M^+$ 3%), 220 (50%), 193 (16%), 86 (37%) and 44 (100%).

3-Acetamido-2-phenylthio-octane, Mass Spec. $^m/e$ 279 ($M^+$ 1.5%), 220 (31%), 142 (22%), 137 (8%) and 100 (100%).

EXAMPLE 9

2-Acetamido-1-methylthio-octane

The procedure of Example 1 was repeated using dimethyldisulphide (96 mg; 1.02 mmol) and 1-octene (358 mg; 3.19 mmol) in acetonitrile (15 ml) at +1.20V until 2 coulomb equivalents of charge had been passed. After the addition of water and extraction with diethyl ether, there was obtained 106 mg of methylthio-octane. Mass Spec. $^m/_e$ 217 ($M^+$) and 44 (100%). I.R. 3300 and 1650 $cm^{-1}$.

EXAMPLE 10

2-Acetamido-1-benzylthio-cyclohexane

A mixture of dibenzyldisulphide (500 mg; 2.03 mmoles) and cyclohexene (1.6 g, 19.8 mmoles) were dissolved in acetonitrile (0.1 m in tetra-n-butyl-ammonium fluoroborate). (Water 37 mg, 2.03 mmoles ; a 1:1 ratio with the disulphide) was added and the solution electrolysed in the anode compartment of the preparative cell of Example 1 at +1.60V (vs Ag/0.01MAg$^+$) until 2.8 coulomb equivalents of charge had been passed. The anolyte was poured into water (100 ml) and extracted with diethyl ether. The ether extract was washed with water, dried with magnesium sulphate and evaporated to give a crude product mixture which was then purified by preparative thin layer chromatography ($SiO_2$, eluted with diethyl ether and 5% acetone) to give 2-acetamido-1-benzylthio-cyclohexane. Mass Spec. $^m/_e$ $P^+$ 263, 91(100%). IR 3300 and 1650 $cm^{-1}$.

2-Acetamido-1-benzylthio-cyclohexane (74 mg) prepared as above was added to 1 molar aqueous sodium hydroxide solution (30 ml) and refluxed for 19 hours. The reaction mixture was cooled, diluted to 100 ml with water and extracted with diethyl ether (3 x 50 ml). The ethereal layer was washed with water (25 ml), dried and evaporated to give 2-amino-1-benzylthio-cyclohexane (58 mg). Mass spec. $^{m}/e$ 221 (parent ion), IR 3300 (broad), 1600 and 1500 $cm^{-1}$.

2-Amino-1-benzylthio-cyclohexane (48 mg) prepared as above was suspended in liquid ammonia (15 ml) and chilled in an acetone-liquid nitrogen slush bath. Small pieces of sodium were added with stirring until the blue colouration persisted for at least 45 minutes. Cooled diethylether (30 ml) was added, the mixture allowed to warm to room temperature and the ammonia to boil off. A saturated aqeuous solution of ammonium chloride (50 ml) was added and the mixture poured into 100 ml of water. The mixture was neutralised to pH 7 by dilute hydrochloric acid and extracted with diethylether (4 x 30 ml). The ethereal layer was washed with water (20 ml), dried ($MgSO_4$) and evaporated to give 2-aminocyclohexane-1-thiol (12 mg) IR 3280 $cm^{-1}$.

CLAIMS

1. An amidothio derivative of the formula

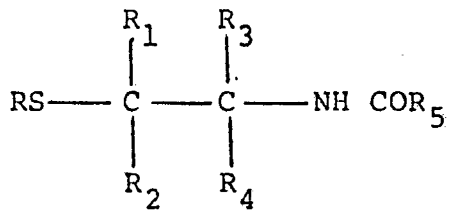

wherein:-

R represents an alkyl, alk-2 to 6-enyl, phenylalkyl, phenyl or heterocyclic group optionally substituted by one or more functional groups inert to electrochemical oxidation;

$R_1$, $R_2$, $R_3$ and $R_4$ independently represent hydrogen or substituent groups of an alkene of the formula

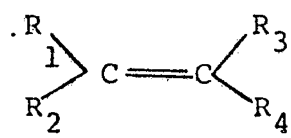

and

$R_5$ represent alkyl, phenylalkyl or phenyl.

2. An amidothiol derivative as claimed in Claim 1 wherein $R_1$, $R_2$, $R_3$ and $R_4$ independently represent hydrogen, alkyl, phenylalkyl, phenyl, carboxy, alkoxycarbonyl, phenylalkoxycarbonyl or phenoxycarbonyl or $R_1$ and $R_3$ together represent alkylene optionally substituted in the hydrocarbon chain by alkylimino, phenylalkylimino, phenylimino, oxygen or sulphur.

3. An amidothiol derivative as claimed in Claim 1 or

Claim 2 wherein:-

R represents $C_1$-$C_4$ alkyl, phenyl-$C_1$-$C_4$ alkyl or alkyl;

$R_1$, $R_2$, $R_3$ and $R_4$ independently represent hydrogen or $C_2$-$C_6$ alkylene; and

$R_5$ represents $C_1$-$C_4$ alkyl.

4. An amidothiol selected from:-

2 - acetamido-1-methylthio-cyclohexane

2 - acetamido-1-phenylthio-cyclohexane

2 - acetamido-1-phenylthio-cyclopentane

2-acetamido-1-phenylthio-octane

2 - acetamido-1-phenylthio-hexane

2 - acetamido-1-benzylthio-cyclohexane

2 - acetamido-3-methylthio-octane

3 - acetamido-2-methylthio-octane

2 - acetamido-1-methylthio-hexane

2 - acetamido -3- phenylthio-octane

3 - acetamido -2- phenylthio-octane

2 - acetamido-1-methylthio-octane

0021637

European Patent Office

# EUROPEAN SEARCH REPORT

Application number

EP 80 30 1840

## DOCUMENTS CONSIDERED TO BE RELEVANT

| Category | Citation of document with indication, where appropriate, of relevant passages | Relevant to claim |
|---|---|---|
| X | CHEMICAL ABSTRACTS, vol. 78, no. 25, 25th June 1973, page 369, no. 159027w<br>Columbus, Ohio, U.S.A.<br>M.Z. KRIMER et al.: "Two-stage addition of sulfur-containing electrophiles. Reaction of methylsulfene tetrafluoroborate with cyclohexene"<br>& DOKL. AKAD. NAUK SSR 1973, 208(4) 864-7<br>* Abstract *<br>-- | 1-4 |
| X | BULL. SOC. CHIM. FRANCE 1956, pages 382-391<br>Paris, FR.<br>F. WINTERNITZ et al.: "Quelques nouvelles réactions de la cyclohexénimine-1,2"<br>* Page 386, right-hand column, lines 43-46 *<br>-- | 1-4 |
| X | J. AM. CHEM. SOC., vol. 81, 20th August 1959, pages 4318-4322<br>Washington D.C., U.S.A.<br>T. TAGUCHI et al.: "Thermal, Solvolytic and Base-catalyzed Decomposition of 2-Acylaminoalkyl-S,S-dimethylsulfonium Iodites"<br>* Page 4320, left-hand column *<br>-- | 1,2 |
| X | FR - A - 2 106 292 (B.A.S.F.)<br>* Pages 6-8; examples 4-7; page 11, claims *<br>--<br>./. | 1,2 |

CLASSIFICATION OF THE APPLICATION (Int. Cl. 3)

C 07 C 149/24
149/26
149/42//
C 07 C 148/00
A 01 N 33/04

TECHNICAL FIELDS SEARCHED (Int.Cl. 3)

C 07 C 149/24
149/26
149/42

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 10-09-1980 | PAUWELS |

EPO Form 1503.1 06.78

European Patent Office

# EUROPEAN SEARCH REPORT

Application number
EP 80 30 1840



## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US - A - 4 086 273 (S. BERAZOSKY)<br>* Abstract; examples 1-19 *<br>-- | 1,2 | |
| X | US - A - 3 849 576 (G. KALOPISSIS)<br>* Column 1, line 63 - column 3, line 58; examples 1, tables 1,2 *<br>-- | 1,2 | |
| X | GB - A - 1 061 529 (COMMERCIAL SOLVENTS CORP.)<br>* Page 1, lines 21-70; examples *<br>-- | 1,2 | TECHNICAL FIELDS SEARCHED (Int. Cl. 3) |
| X | GB - A - 1 027 752 (COMMERCIAL SOLVENTS CORP.)<br>* Page 1, lines 10-25; examples *<br>-- | | |
| X | GB - A - 1 433 920 (IMPERIAL CHEMICAL INDUSTRIES)<br>* Page 4, lines 24-32 *<br>---- | | |